# EUROPEAN PATENT SPECIFICATION

(11) **EP 2 767 438 B1**
(45) Date of publication and mention of the grant of the patent: **23.12.2015**
(21) Application number: 14154716.6
(22) Date of filing: 11.02.2014
(51) Int. Cl.: B60Q 1/40

(54) **Straight-travelling/turning determination device**
Geradeausfahrt- bzw. Kurvenfahrterkennungsvorrichtung
Dispositif de détermination de conduite en ligne droite ou en virage

(30) Priority: 14.02.2013 JP 2013026412
(43) Date of publication of application: 20.08.2014
(73) Proprietor: Honda Motor Co., Ltd., Tokyo 107-8556 (JP)
(72) Inventor: Tetsuka, Takashi, Wako-shi, Saitama 351-0193 (JP)
(74) Representative: Stevens, Jason Paul

(56) References cited:
- WO-A1-03/093035
- JP-A- S6 253 256
- US-A1- 2004 243 293
- US-A1- 2005 122 215

## Description

The present invention relates to a straight-travelling/turning determination device that determines whether a vehicle is travelling straight or turning.

A technique described in Japanese Patent Laid-open No. Sho 62-53256 is concerned with carrying out blinker cancel (that is, cancelling operation of the turn signals) on a motorcycle. In this technique, it is determined whether the motorcycle is travelling straight or cornering based on the fact that the difference in the rotational speeds of the front and rear wheels varies depending on whether the vehicle is travelling straight or whether it is cornering. Specifically, it is determined that the vehicle is travelling straight when the difference in the rotational speeds is small, and it is determined that the vehicle is cornering when the difference in the rotational speeds is large.

The difference in the rotational speeds between the front and rear wheels tends to change, depending on deterioration, wear, and change in air pressure of the tyre. In the technique described in Japanese Patent Laid-open No. Sho 62-53256, it is impossible to determine whether the motorcycle is travelling straight or cornering with a high accuracy if the difference in the rotational speeds between the front and rear wheels has changed.

US 2005/0122215 discloses a self-cancelling turn signal for use in a truck or similar vehicle. Detection of whether or not the truck is turning is carried out based on the different rotational speeds of wheels on the same axle; if the truck is turning, then the two wheels follow curves of differing radii, and so must rotate at differing speeds.

US 2004/0243293 is concerned with a device for judging whether a vehicle is moving in a straight line. Again, this determination is based on the rotational speeds of left and right wheels.

It is an object of at least the preferred embodiments of the present invention to provide a straight-travelling/turning determination device having enhanced accuracy of determination as to whether a vehicle is travelling straight or turning.

According to a first aspect of the present invention, there is provided a straight-travelling/turning determination device for use in a motorcycle including: a front wheel rotational speed detector for detecting a rotational speed of a front wheel of a vehicle; a rear wheel rotational speed detector for detecting a rotational speed of a rear wheel of said vehicle; a rotational speed comparison value calculator for calculating a rotational speed comparison value, which is a value resulting from comparison between the rotational speed of the front wheel and the rotational speed of the rear wheel; and a straight-travelling/turning determiner that determines whether said vehicle is travelling straight or turning based on the magnitude of the rotational speed comparison value; the straight-travelling/turning determination device being characterized by including: a vehicle speed detector that detects vehicle speed; and an acceleration detector that detects vehicle acceleration; wherein in a state where the vehicle speed is equal to or lower than a first predetermined speed and an absolute value of the vehicle acceleration is equal to or smaller than a predetermined acceleration and a blinker is not being actuated, the straight-travelling/turning determiner uses the rotational speed comparison value as a straight-travelling rotational speed comparison value, and determines that the vehicle is turning if a ratio or difference between the rotational speed comparison value and the straight-travelling rotational speed comparison value becomes larger than a threshold value.

According to the present invention, a period when the vehicle is travelling straight is determined, and the rotational speed comparison value of the front and rear wheels in this period is used as the straight-travelling rotational speed comparison value. Furthermore, it is determined that the vehicle is turning if the ratio or difference between the rotational speed comparison value and the straight-travelling rotational speed comparison value is larger than the threshold value. Therefore, a determination as to whether the vehicle is travelling straight or turning can be made with high accuracy even if air pressure change, deterioration, etc. of the tyres has occurred.

Furthermore, the rotational speed comparison value in a state where the vehicle speed is equal to or lower than a first predetermined speed and the absolute value of the vehicle acceleration is equal to or smaller than a predetermined acceleration and the blinker is not being actuated is used as the straight-travelling rotational speed comparison value. Therefore, rotational speed comparison values obtained during turning, or during blinker actuation (when turning would be expected), or during high-speed travelling in which the outer diameter of the tyres readily change due to centrifugal force, or during high acceleration or deceleration (when the absolute value of the acceleration is large) in which the tyres readily slip on the road surface, can all be excluded from the straight-travelling rotational speed comparison value. This can further enhance the accuracy of determination as to whether the vehicle is travelling straight or turning.

Preferably, the straight-travelling rotational speed comparison value is updated if the state where the vehicle speed is equal to or lower than the first predetermined speed and the absolute value of the vehicle acceleration is equal to or smaller than the predetermined acceleration and the blinker is not being actuated has continued for a first predetermined time.

This arrangement can exclude the case where the condition that the vehicle speed is equal to or lower than the first predetermined speed and the absolute value of the vehicle acceleration is equal to or smaller than the predetermined acceleration and the blinker is not being actuated is only instantaneously satisfied. Thus, the accuracy of the straight-travelling rotational speed comparison value is enhanced.

In a further preferred form, the straight-travelling rotational speed comparison value is an average value of the rotational speed comparison value in the first predetermined time.

Thus, the straight-travelling rotational speed comparison value can be updated to a reliable value, and the accuracy of determination as to whether the vehicle is travelling straight or turning can be enhanced.

Preferably, a limit is set on the amount by which the updated straight-travelling rotational speed comparison value can change if the rotational speed comparison value, in the state in which the vehicle speed is equal to or lower than the first predetermined speed and the absolute value of the vehicle acceleration is equal to or smaller than the predetermined acceleration and the blinker is not being actuated, has a ratio or difference greater than a predetermined value with respect to the previous straight-travelling rotational speed comparison value.

With this arrangement, a sudden or abrupt change in the straight-travelling rotational speed comparison value can be suppressed.

Preferably, the amount by which the updated straight-travelling rotational speed comparison value can change from the previous straight-travelling rotational speed comparison value is limited to a value equal to or smaller than the predetermined value.

Thus, sudden change in the straight-travelling rotational speed comparison value can be further suppressed.

Preferably, the predetermined value of an increase in the straight-travelling rotational speed comparison value is set to a value equal to or smaller than the threshold value.

This arrangement can effectively suppress the straight-travelling rotational speed comparison value being updated in the state where the vehicle is performing steady circular turning.

In one form, the rotational speed comparison value is a ratio between the rotational speeds of the front and rear wheels, and in an alternative form, the rotational speed comparison value is a difference between the rotational speeds of the front and rear wheels.

A preferred embodiment of the invention will now be described by way of example only and with reference to the accompanying drawings, in which:
FIG. 1 is a side view of a motorcycle equipped with a straight-travelling/turning determination device;
FIG. 2 is a functional block diagram of the straight-travelling/turning determination device;
FIG. 3 is a flowchart showing operation of blinker cancel (cancelling operation of a turn signal) based on a straight-travelling/turning determination by the straight-travelling/turning determination device;
FIG. 4 is a flowchart showing operation of blinker cancel irrespective of the straight-travelling/turning determination by the straight-travelling/turning determination device;
FIG. 5 is a flowchart showing operation of updating a straight-travelling rotational speed comparison value by the straight-travelling/turning determination device; and
FIG. 6 is a time chart showing the relationship between a vehicle speed, a vehicle acceleration, actuation and non-actuation of a blinker, a rotational speed comparison value, and the straight-travelling rotational speed comparison value.

A preferred embodiment of a straight-travelling/turning determination device according to the present invention will now be described in detail with reference to the accompanying drawings.

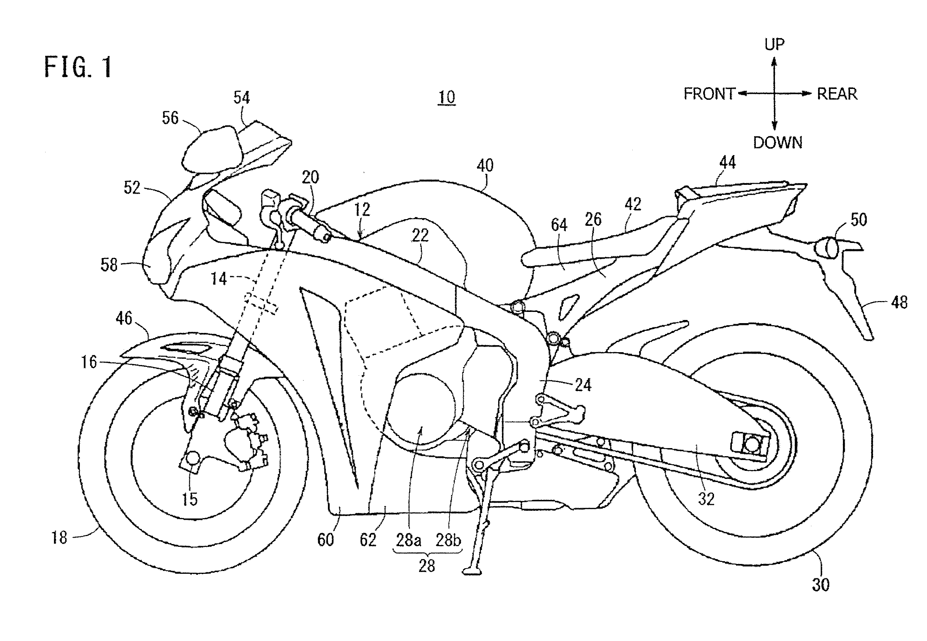

FIG. 1 is a side view of a motorcycle 10 equipped with the straight-travelling/turning determination device. Unless indicated to the contrary, the directions "front", "rear", "up" and "down" should be interpreted in accordance with the arrows shown in FIG. 1, and the directions "left" and "right" should be interpreted from the viewpoint of a driver sitting on the motorcycle.

The motorcycle 10 has a body frame 12, a head pipe 14 provided at a front end of the body frame 12, left and right front forks 16 rotatably supported by the head pipe 14, a steerable front wheel 18 rotatably supported by the left and right front forks 16, and a steering handlebar 20 attached to an upper part of the left and right front forks 16.

The body frame 12 includes left and right main frames 22 extending rearwardly from the head pipe 14, left and right pivot plates 24 provided at the rear of the left and right main frames 22, and left and right seat frames 26 that are provided on the left and right pivot plates 24 and extend obliquely rearwardly and upwardly. A power unit 28 that generates power is provided on the left and right main frames 22. A swing arm 32 which rotatably supports a driven rear wheel 30 is swingably supported by the pivot plate 24. The power unit 28 houses an engine 28a and a transmission 28b in its case.

A fuel tank 40 for storing fuel is provided above the left and right main frames 22. A driver seat 42 on which a driver can sit is provided to the rear of the fuel tank 40 and above the left and right seat frames 26, and a pillion seat 44 on which a pillion rider can sit is provided to the rear of the driver seat 42. A front fender 46 is provided on the left and right front forks 16, and a rear fender 48 is provided at a rear part of the left and right seat frames 26. This rear fender 48 supports a rear blinker (turn signal) 50.

The motorcycle 10 further includes the following components: an upper cowl 52 that is provided on the body frame 12 and protects the front side; a windscreen 54 provided above the upper cowl 52; a rear-view mirror 56 that is provided at the upper part of an upper cowl 52 and allows the driver to see behind the motorcycle; a headlight 58 that is provided at a front part of the upper cowl 52 and emits light forwardly; a middle cowl 60 protecting a front part of the motorcycle 10; a lower cover 62 that is provided below this middle cowl 60 and extends rearwardly; and a side cover 64 that is provided above the seat frames 26 and covers an area from the upper part of the seat frames 26 to a lower part of the driver seat 42. A front blinker (turn signal) is incorporated in the rear-view mirror 56.

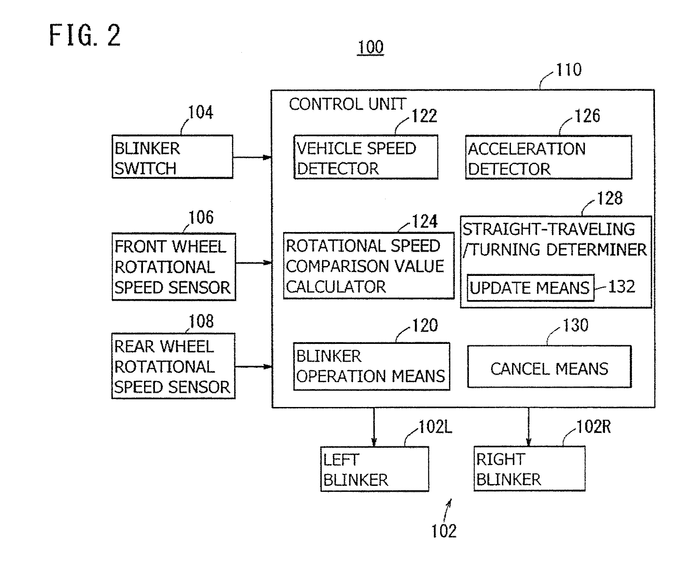

FIG. 2 is a functional block diagram of a straight-travelling/turning determination device 100. The straight-travelling/turning determination device 100 includes a left blinker 102L, a right blinker 102R, a blinker switch 104, a front wheel rotational speed sensor (or front wheel rotational speed detector) 106, a rear wheel rotational speed sensor (or rear wheel rotational speed detector) 108, and a control unit 110. The left blinker 102L and the right blinker 102R will often be referred to hereinafter collectively as a blinker 102.

Each of the left blinker 102L and the right blinker 102R includes an above-described front blinker and rear blinker 50. Specifically, the front blinker has a left front blinker and a right front blinker, and the rear blinker 50 has a left rear blinker and a right rear blinker. The left blinker 102L is formed of the left front blinker and the left rear blinker, and the right blinker 102R is formed of the right front blinker and the right rear blinker.

The blinker switch 104 is a switch that is provided on or near the handlebar 20, and is used to make one of the left blinker 102L or the right blinker 102R light up (including blinking). The blinker switch 104 has a lever that allows the driver to order lighting of the left blinker 102L or the right blinker 102R, and the lever is movable in the left and right directions. The blinker switch 104 outputs an operation signal according to the operation selected by the driver to the control unit 110.

The front wheel rotational speed sensor 106 is provided at a front wheel rotation shaft, and detects the rotational speed Vrf of the front wheel 18 and outputs this detected rotational speed Vrf to the control unit 110. Here, the rotational speed is described as a circumferential speed of the wheel. However, in practice, the rotational speed sensor detects a number of pulses per unit time, and this number is multiplied by a coefficient to derive the circumferential speed. Therefore, the rotational speed is not limited to the circumferential speed of the wheel, and may be any parameter as long as it is proportional to the circumferential speed, such as the rate of rotation or the number of pulses of the rotational speed sensor.

The rear wheel rotational speed sensor 108 is provided at a rear wheel rotation shaft, and detects the rotational speed Vrr of the rear wheel 30 and outputs this detected rotational speed Vrr to the control unit 110. The front wheel rotational speed sensor 106 and the rear wheel rotational speed sensor 108 can also be used for other kinds of control, such as anti-lock brake system (ABS) control and traction control system (TCS) control.

The control unit 110 includes blinker operation means 120, a vehicle speed detector 122, a rotational speed comparison value calculator 124, an acceleration detector 126, a straight-travelling/turning determiner 128, and cancel means 130. The control unit 110 includes at least a computer that is formed of a CPU (not shown) and so forth, and has a timer and a memory in which programs and so forth are stored. This computer functions as the control unit 110 of the present embodiment, by reading out the program stored in the memory.

The blinker operation means 120 can actuate the left blinker 102L or the right blinker 102R according to operation of the blinker switch 104. For example, when the driver moves the above-described lever of the blinker switch 104 to the left in order to indicate that the vehicle will turn left, the blinker operation means 120 lights (actuates) the left blinker 102L. When the driver moves the lever of the blinker switch 104 to the right in order to indicate that the vehicle will turn right, the blinker operation means 120 lights (actuates) the right blinker 102R. When the lever of the blinker switch 104 is pressed, the blinker operation means 120 stops lighting (actuation) of the left blinker 102L or the right blinker 102R.

The vehicle speed detector 122 detects the vehicle speed V of the motorcycle 10 by using at least one of the rotational speed Vrf of the front wheel 18 as detected by the front wheel rotational speed sensor 106 and the rotational speed Vrr of the rear wheel 30 as detected by the rear wheel rotational speed sensor 108. The vehicle speed V can be detected using known techniques and methods, and so a description thereof is omitted.

The rotational speed comparison value calculator 124 calculates a rotational speed comparison value Vdiff, which is a value resulting from comparison between the rotational speed Vrf of the front wheel 18 as detected by the front wheel rotational speed sensor 106 and the rotational speed Vrr of the rear wheel 30 as detected by the rear wheel rotational speed sensor 108. In one specific form, it calculates the rotational speed comparison value Vdiff by dividing the rotational speed Vrf of the front wheel 18 by the rotational speed Vrr of the rear wheel 30 (so that Vdiff = Vrf/Vrr). In an alternative form, the rotational speed comparison value Vdiff may be a value obtained by subtracting the rotational speed Vrr from the rotational speed Vrf (so that Vdiff = Vrf - Vrr).

The acceleration detector 126 here detects vehicle acceleration A of the motorcycle 10 by using at least one of the rotational speed Vrf of the front wheel 18 as detected by the front wheel rotational speed sensor 106 and the rotational speed Vrr of the rear wheel 30 as detected by the rear wheel rotational speed sensor 108. The acceleration detector 126 may detect the vehicle acceleration A of the motorcycle 10 based on the vehicle speed V as detected by the vehicle speed detector 122 or, in an alternative form, may use a separate acceleration sensor.

The straight-travelling/turning determiner 128 determines whether the motorcycle 10 is travelling straight or turning based on the magnitude of the rotational speed comparison value Vdiff. Specifically, it determines whether the motorcycle 10 is travelling straight or turning based on whether or not a ratio (Vdiff/Vdiff_s) between Vdiff, the rotational speed comparison value calculated by the rotational speed comparison value calculator 124, and Vdiff_s, the rotational speed comparison value obtained when the motorcycle 10 is estimated to be travelling straight (which is hereinafter referred to as "straight-travelling rotational speed comparison value Vdiff_s"), or a difference between Vdiff and Vdiff_s (Vdiff - Vdiff_s), is equal to or smaller than a threshold value TH.

The straight-travelling/turning determiner 128 further includes update means 132, which updates the straight-travelling rotational speed comparison value Vdiff_s. The outer diameters of the front wheel 18 and the rear wheel 30 tend to change in association with wear of the tyres and so forth. When the outer diameters of the front wheel 18 and the rear wheel 30 change, the values of the rotational speeds Vrf and Vrr as detected by the front wheel rotational speed sensor 106 and the rear wheel rotational speed sensor 108 change. The straight-travelling rotational speed comparison value Vdiff_s is updated to take these changes into account, in order to enhance the accuracy of determination of whether the motorcycle 10 is travelling straight or turning.

The update means 132 will only update the straight-travelling rotational speed comparison value Vdiff_s based on the rotational speed comparison value Vdiff detected by the rotational speed comparison value calculator 124 if a predetermined condition is satisfied; if the vehicle speed V is equal to or lower than a predetermined speed V1, the absolute value of the vehicle acceleration A is equal to or smaller than a predetermined acceleration A1, and the blinker 102 is not being actuated, then the update means 132 determines that straight travelling is being carried out and thus that the predetermined condition is satisfied.

The cancel means 130 carries out blinker cancel (that is, cancelling operation of the turn signals) based on straight-travelling/turning determination, and also carries out blinker cancel irrespective of the straight-travelling/turning determination. These blinker cancel operations will be described in detail later. The blinker cancel refers to automatically stopping lighting (actuation) of the left blinker 102L or the right blinker 102R.

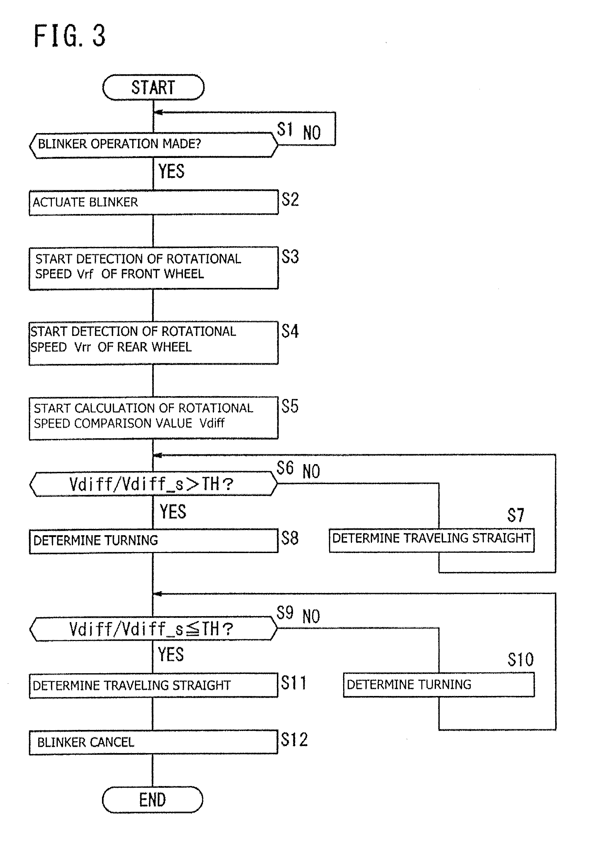

The operation of the blinker cancel based on the straight-travelling/turning determination by the straight-travelling/turning determination device 100 will now be described, in conjunction with the flowchart of FIG. 3.

First, the blinker operation means 120 determines whether or not the driver has operated the blinker switch 104 to order actuation of the blinker 102 (step S1).

If it is determined in step S1 that the blinker switch 104 has not been operated, the blinker operation means 120 remains at step S1 until the switch is operated. If it is determined that the blinker switch 104 has been operated, the blinker operation means 120 actuates the blinker 102 according to the operation of the blinker switch 104 (step S2).

Subsequently, the front wheel rotational speed sensor 106 starts detection of the rotational speed Vrf of the front wheel 18 (step S3), and the rear wheel rotational speed sensor 108 starts detection of the rotational speed Vrr of the rear wheel 30 (step S4). The front wheel rotational speed sensor 106 and the rear wheel rotational speed sensor 108 carry out the detection at a predetermined cycle.

Then, the rotational speed comparison value calculator 124 starts calculation of the rotational speed comparison value Vdiff (step S5). Specifically, the rotational speed comparison value calculator 124 starts processing by calculating the rotational speed comparison value Vdiff, which is a value resulting from comparison between the rotational speed Vrf of the front wheel 18 as last detected in step S3 and the rotational speed Vrr of the rear wheel 30 as last detected in step S4 (Vdiff = Vrf/Vrr or Vdiff = Vrf - Vrr). The rotational speed comparison value calculator 124 calculates the rotational speed comparison value Vdiff at the above-mentioned predetermined cycle.

Next, the straight-travelling/turning determiner 128 determines whether or not the ratio between the rotational speed comparison value Vdiff last calculated in step S5 and the straight-travelling rotational speed comparison value Vdiff_s (Vdiff/Vdiff_s), or the difference therebetween Vdiff and Vdiff_s (Vdiff - Vdiff_s), is larger than a threshold value TH (step S6). When comparing the ratio between the rotational speed comparison value Vdiff and the straight-travelling rotational speed comparison value Vdiff_s (Vdiff/Vdiff_s) with the threshold value TH, the threshold value TH is preferably equal to or smaller than 1.05 and more preferably 1.01. When comparing the difference between the rotational speed comparison value Vdiff and the straight-travelling rotational speed comparison value Vdiff_s (Vdiff - Vdiff_s) with the threshold value TH, the threshold value TH is preferably 0.5 km/h, and more preferably 0.1 km/h.

If the ratio (or difference) between the rotational speed comparison value Vdiff and the straight-travelling rotational speed comparison value Vdiff_s is found to be equal to or smaller than the threshold value TH in step S6, the straight-travelling/turning determiner 128 determines that the motorcycle 10 is travelling straight (step S7), and operation returns to step S6. On the other hand, if it is determined in step S6 that the ratio (or difference) between the rotational speed comparison value Vdiff and the straight-travelling rotational speed comparison value Vdiff_s is larger than the threshold value TH, the straight-travelling/turning determiner 128 determines that the motorcycle 10 is turning (step S8), and operation proceeds to step S9.

In step S9, the straight-travelling/turning determiner 128 determines whether or not the ratio (or difference) between the rotational speed comparison value Vdiff and the straight-travelling rotational speed comparison value Vdiff_s last calculated in step S5 is equal to or smaller than the threshold value TH.

If it is determined in step S9 that the ratio (or difference) between the rotational speed comparison value Vdiff and the straight-travelting rotational speed comparison value Vdiff_s is not equal to or smaller than the threshold value TH, the straight-travelling/turning determiner 128 determines that the motorcycle 10 is still turning (step S10), and operation returns to step S9. In this case, blinker cancel is not carried out, and the lighting (actuation) of the left blinker 102L or the right blinker 102R is not stopped.

However, if it is determined in step S9 that the ratio (or difference) between the rotational speed comparison value Vdiff and the straight-travelling rotational speed comparison value Vdiff_s is equal to or smaller than the threshold value TH, the straight-travelling/turning determiner 128 determines that the motorcycle 10 is now travelling straight (step S11). Subsequently, the cancel means 130 carries out blinker cancel (step S12); that is, the lighting (actuation) of the left blinker 102L or the right blinker 102R is stopped.

When the motorcycle 10 turns, the motorcycle 10 enters a turning action from a straight travelling action and then returns to the straight travelling action when the turn is completed. In step S6, it is determined whether or not the motorcycle 10 has entered a turning action from a straight travelling action, and in step S9, it is determined whether or not the motorcycle 10 has returned to the straight travelling action from the turning action. Blinker cancel is carried out after the turn is completed.

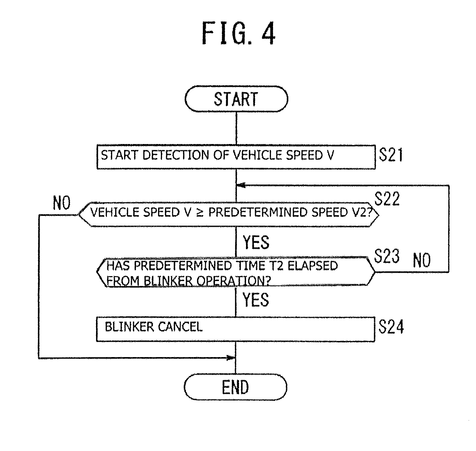

The operation of the blinker cancel irrespective of the straight-travelling/turning determination by the straight-travelling/turning determination device 100 will now be described, in conjunction with the flowchart of FIG. 4.

The operation as shown in FIG. 4 is carried out when actuation of one of the left blinker 102L and the right blinker 102R starts, and is carried out in parallel with the operation shown in FIG. 3.

When the left blinker 102L or the right blinker 102R is actuated according to operation of the blinker switch 104 in step S2 in FIG. 3, the vehicle speed detector 122 starts processing of detecting the vehicle speed V by using at least one of the rotational speed Vrf of the front wheel 18 and the rotational speed Vrr of the rear wheel 30 last detected in step S3 and step S4 in FIG. 3 (step S21).

Then, the cancel means 130 determines whether or not the vehicle speed V last detected in step S21 is equal to or higher than a predetermined speed V2 (step S22). The predetermined speed V2 is a relatively high speed, and is higher than the speed at which the motorcycle 10 enters a crossing when turning (left or right) at the crossing, and in a specific embodiment is set to 50 km/h, for example.

If it is determined in step S22 that the vehicle speed V is equal to or higher than the predetermined speed V2, the cancel means 130 determines whether or not a predetermined time T2 has elapsed from when the operation of the blinker switch 104 was made in step S1 in FIG. 3 (step S23). This determination as to whether or not the predetermined time T2 has elapsed can be made by the above-mentioned timer counting the elapsed time.

If it is determined in step S23 that the predetermined time T2 has not elapsed since the operation of the blinker switch 104, operation returns to step S22, and the above-described steps are repeated. If it is determined in step S23 that the predetermined time T2 has elapsed since the operation of the blinker switch 104, the cancel means 130 carries out the blinker cancel (step S24). That is, it carries out the blinker cancel if the vehicle speed V remains equal to or higher than the predetermined speed V2 until the elapse of the predetermined time T2 from the start of the blinker operation.

On the other hand, if it is determined in step S22 that the vehicle speed V falls below the predetermined speed V2 before the elapse of the predetermined time T2 from the start of the blinker operation, processing is ended without the blinker cancel. In this case, the actuation of the left blinker 102L or the right blinker 102R is stopped by the straight-travelling/turning determination shown in FIG. 3, or by operation of the above-described lever of the blinker switch 104 by the user.

If the vehicle speed V remains equal to or higher than the predetermined speed V2 for the predetermined time T2 after the lever of the blinker switch 104 is operated, it is considered that the motorcycle 10 is not turning at a crossing but is instead making a lane change (for example, overtaking a slower vehicle). Therefore, the blinker cancel is carried out after the elapse of the predetermined time T2 from the time of the operation of the blinker switch 104. This predetermined time T2 is preferably a sufficient time for the lane change to be completed, and is in a specific embodiment set to seven seconds, for example.

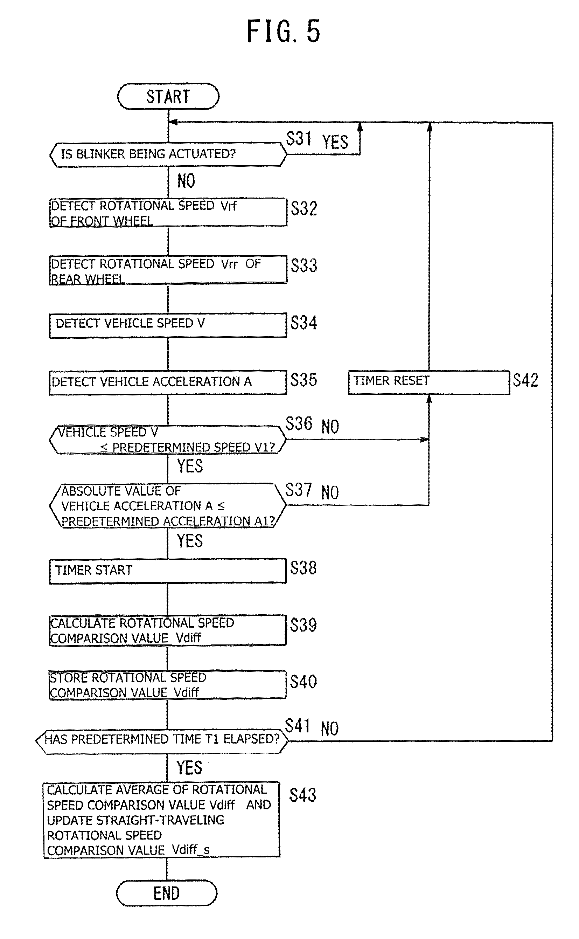

Next, the operation of updating the straight-travelling rotational speed comparison value Vdiff_s by the straight-travelling/turning determination device 100 will be described, in conjunction with the flowchart of FIG. 5.

Firstly, the update means 132 determines whether or not the left blinker 102L or the right blinker 102R is being actuated (step S31).

If the left blinker 102L or the right blinker 102R is being actuated, then it can assumed that the motorcycle 10 is turning or is about to turn, and so if it is determined in step S31 that the left blinker 102L or the right blinker 102R is being actuated, operation remains at step S31 until actuation is stopped.

However, if it is determined that neither the left blinker 102L nor the right blinker 102R is actuated, the front wheel rotational speed sensor 106 detects the rotational speed Vrf of the front wheel 18 (step S32) and the rear wheel rotational speed sensor 108 detects the rotational speed Vrr of the rear wheel 30 (step S33).

Then, the vehicle speed detector 122 detects the vehicle speed V by using at least one of the rotational speed Vrf of the front wheel 18 and the rotational speed Vrr of the rear wheel 30 as detected in step S32 and step S33 (step S34), and the acceleration detector 126 detects the vehicle acceleration A based on the vehicle speed V detected in step S34 (step S35).

Subsequently, the update means 132 determines whether or not the vehicle speed V detected in the step S34 is equal to or lower than a predetermined speed V1 (step S36). This predetermined speed V1 is set to be close to the predetermined speed V2 (to a value within a predetermined range from the predetermined speed V2), or equal to or lower than the predetermined speed V2. In the present embodiment, the predetermined speed V1 is set to 50 km/h.

Blinker cancel control using the straight-travelling/turning determination based on the rotational speed comparison value Vdiff between the front and rear wheels is suitable for a right or left turn at a crossing or the like, and it is known that the vehicle speed V rarely exceeds 50 km/h in a right or left turn. Therefore, by setting the predetermined speed V1 to 50 km/h, the timing of this update operation can be concentrated on timing near a right or left turn at a crossing or the like and the accuracy thereof can be enhanced. When the vehicle speed V is high (higher than the predetermined speed V1), the outer diameters of the tyres of the front wheel 18 and the rear wheel 30 tend to change due to centrifugal force, because the rotation rate of the wheels is high.

If it is determined in step S36 that the vehicle speed V is equal to or lower than the predetermined speed V1, the update means 132 determines whether or not the absolute value of the vehicle acceleration A detected in step S35 is equal to or smaller than a predetermined acceleration A1 (e.g. 1 km/h per second) (step S37). In the case of high acceleration or deceleration in which the absolute value of the vehicle acceleration A is larger than the predetermined acceleration A1, the tyres of the front wheel 18 and the rear wheel 30 are likely to be slipping on the road surface and errors can readily occur in the rotational speed comparison value Vdiff even during straight travelling.

If it is determined in step S37 that the absolute value of the vehicle acceleration A is equal to or smaller than the predetermined acceleration A1, the update means 132 determines that the predetermined condition is satisfied and starts the above-described timer (step S38). If the timer has already been started (that is, if the timer is already counting the time), the operation of step S38 is not carried out.

Then, the rotational speed comparison value calculator 124 calculates the rotational speed comparison value Vdiff, which is a value resulting from comparison between the rotational speed Vrf of the front wheel 18 as detected in step S32 and the rotational speed Vrr of the rear wheel 30 as detected in step S33 (step S39), and stores this calculated rotational speed comparison value Vdiff in the memory (step S40).

Subsequently, the update means 132 determines whether or not the predetermined time T1 has elapsed (step S41). That is, it determines whether or not the elapsed time as counted by the timer has passed the predetermined time T1 (for example, three seconds). If it is determined in step S41 that the counted time has not passed the predetermined time T1, operation returns to step S31 and the above-described steps are repeated.

As described above, the branching to "No" occurs in step S41 if satisfaction of the predetermined condition (the vehicle speed V is equal to or lower than the predetermined speed V1, and the absolute value of the vehicle acceleration A is equal to or smaller than the predetermined acceleration A1, and the blinker 102 is not being actuated) has not continued for the predetermined time T1. It is appropriate that this predetermined time T1 is set to three seconds or longer. This is because speed is rarely maintained for three seconds or longer at a normal curve, and therefore it can be determined that the motorcycle 10 is likely to be travelling straight if satisfaction of the predetermined condition has continued for the predetermined time T1 or longer.

If it is determined in step S36 that the vehicle speed V is not equal to or lower than the predetermined speed V1, or if it is determined in step S37 that the absolute value of the vehicle acceleration A is not equal to or smaller than the predetermined acceleration A1, that is, if it is determined that the predetermined condition is not satisfied, the update means 132 resets the timer in step S42, and operation returns to the S31. In step S42, the rotational speed comparison value Vdiff stored in the memory in step S40 is also deleted.

On the other hand, if it is determined in step S41 that the predetermined time T1 has elapsed, the update means 132 calculates the average value of the plural rotational speed comparison values Vdiff stored during the predetermined time T1 and updates the straight-travelling rotational speed comparison value Vdiff_s to this calculated average value (step S43).

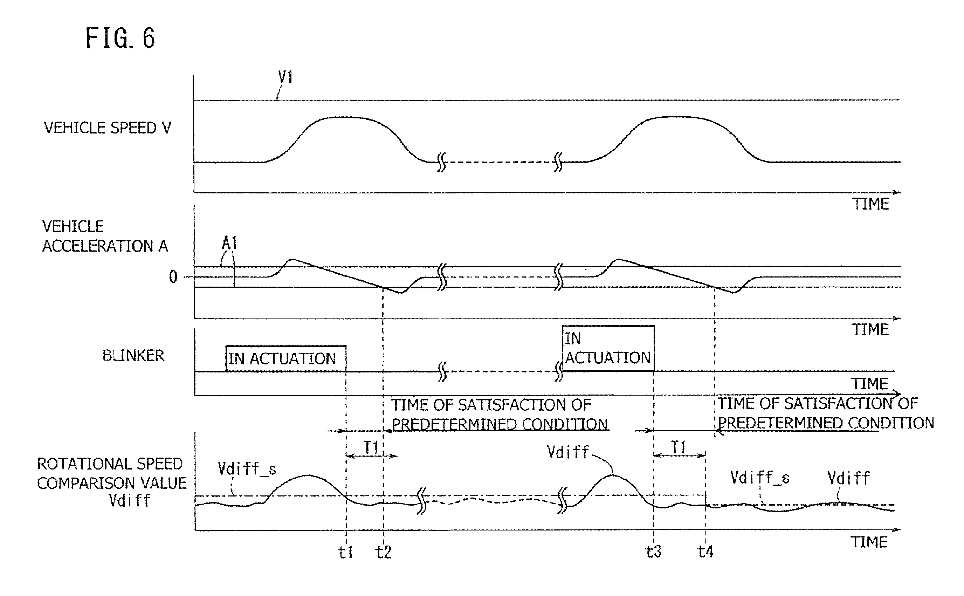

FIG. 6 is a time chart showing the relationship of vehicle speed V, vehicle acceleration A, actuation and non-actuation of the blinker 102, rotational speed comparison value Vdiff, and straight-travelling rotational speed comparison value Vdiff_s.

As shown in FIG. 6, the rotational speed comparison value Vdiff is calculated and stored (step S39 and step S40 in FIG. 5) from time t1, at which time the vehicle speed V is equal to or lower than the predetermined speed V1 and the absolute value of the vehicle acceleration A is equal to or smaller than the predetermined acceleration A1 and the blinker 102 is in the non-actuated state. However, the absolute value of the vehicle acceleration A becomes larger than the predetermined acceleration A1 at time t2, which is before the elapse of the predetermined time T1 from time t1 (that is, the time during which the predetermined condition is satisfied is shorter than the predetermined time T1). Thus, update of the straight-travelling rotational speed comparison value Vdiff_s is not carried out. In this case, the rotational speed comparison value Vdiff stored in the period from the time t1 to the time t2 is deleted.

Further, the rotational speed comparison value Vdiff is also calculated and stored (step S39 and step S40 in FIG. 5) from time t3, at which time the vehicle speed V is equal to or lower than the predetermined speed V1 and the absolute value of the vehicle acceleration A is equal to or smaller than the predetermined acceleration A1 and the blinker 102 is in the non-actuated state. Then, the predetermined condition is satisfied at least until time t4, which is at the elapse of the predetermined time T1 from time t3. Thus, the straight-travelling rotational speed comparison value Vdiff_s is updated to the average value of the rotational speed comparison value Vdiff stored in the period from the time t3 to the time t4. Therefore, the straight-travelling rotational speed comparison value Vdiff_s is updated at the time t4.

In this manner, a time when straight travelling is being carried out is estimated by determining whether or not the predetermined condition is satisfied, and the straight-travelling rotational speed comparison value Vdiff_s is updated to the rotational speed comparison value Vdiff of the front wheel 18 and the rear wheel 30 at this time. Therefore, a determination as to whether the motorcycle 10 is travelling straight or turning can be made with high accuracy even if air pressure change, deterioration, etc. of the tyre has occurred.

Furthermore, the rotational speed comparison value Vdiff in the state in which the predetermined condition is satisfied (the state in which the vehicle speed V is equal to or lower than the predetermined speed V1 and the absolute value of the vehicle acceleration A is equal to or smaller than the predetermined acceleration A1 and the blinker 102 is not being actuated) is used as the straight-travelling rotational speed comparison value Vdiff_s. Therefore, rotational speed comparison values Vdiff obtained during turning, or during blinker actuation (which suggests that turning is being carried out), or at a time of high-speed travelling in which the outer diameter of the tyres readily change due to centrifugal force, or at a time of high acceleration or deceleration in which the tyres readily slip on the road surface, can all be excluded from the straight-travelling rotational speed comparison value Vdiff_s. This can further enhance the accuracy of determination as to whether the motorcycle 10 is travelling straight or turning.

Because the straight-travelling rotational speed comparison value Vdiff_s is only updated if satisfaction of the predetermined condition has continued for the predetermined time T1, the situation where the predetermined condition is only instantaneously satisfied can be excluded, which further enhances the accuracy of the straight-travelling rotational speed comparison value Vdiff_s.

Because the average value of the rotational speed comparison value Vdiff in the predetermined time T1 is used as the straight-travelling rotational speed comparison value Vdiff_s, the straight-travelling rotational speed comparison value Vdiff_s can be updated to a reliable value, and the accuracy of determination as to whether the motorcycle 10 is travelling straight or turning can be enhanced.

If the vehicle speed V is equal to or higher than the predetermined speed V2, actuation of the blinker 102 is automatically stopped after the predetermined time T2 has elapsed since actuation operation of the blinker 102, irrespective of a determination result by the straight-travelling/turning determiner 128. Therefore, the blinker cancel can be properly carried out not only in a left or right turn but also in a lane change, in which the difference in the rotational speed between the front wheel 18 and the rear wheel 30 is extremely small. Moreover, because the predetermined speed V1 is set to a value close to the predetermined speed V2 or lower than it, the straight-travelling rotational speed comparison value Vdiff_s is not updated during high-speed travelling, so that blinker cancel based on straight-travelling/turning determination is not carried out and the straight-travelling rotational speed comparison value Vdiff_s can be updated in an appropriate vehicle speed range.

The above-described embodiment may be modified as follows.

### Modification Example 1

If the average value of the rotational speed comparison value Vdiff when the predetermined condition is satisfied for the predetermined time T1 has a ratio or difference surpassing a predetermined value with respect to the previous straight-travelling rotational speed comparison value Vdiff_s, a limit may be set on the updated straight-travelling rotational speed comparison value Vdiff_s. That is, an amount of change between the previous straight-travelling rotational speed comparison value Vdiff_s and the updated straight-travelling rotational speed comparison value Vdiff_s is limited to a value equal to or smaller than the predetermined value. This can suppress a sudden change in the straight-travelling rotational speed comparison value Vdiff_s.

This predetermined value on the increase side (the predetermined value in the case where the present straight-travelling rotational speed comparison value Vdiff_s is larger than the previous straight-travelling rotational speed comparison value Vdiff_s) may be set to a value equal to or smaller than the threshold TH value. This can effectively suppress the straight-travelling rotational speed comparison value Vdiff_s obtained when the motorcycle 10 is deemed to be making steady circular turning. Specifically, in steady circular turning, it may be determined that the predetermined condition is satisfied in some cases. However, by setting the predetermined value on the increase side to the threshold value TH, inaccurate updating of the straight-travelling rotational speed comparison value Vdiff_s in the case of steady circular turning can be effectively suppressed.

### Modification Example 2

In the above-described embodiment, the average value of the plural rotational speed comparison values Vdiff stored during the predetermined time t1 is used as the straight-travelling rotational speed comparison value Vdiff_s. However, any one of the rotational speed comparison values Vdiff (for example, the minimum rotational speed comparison value Vdiff or the latest rotational speed comparison value Vdiff) stored during the predetermined time T1 may be used as the straight-travelling rotational speed comparison value Vdiff_s. Alternatively, if the predetermined condition is satisfied, the straight-travelling rotational speed comparison value Vdiff_s may be updated immediately without waiting for the elapse of the predetermined time T1. In this case, the straight-travelling rotational speed comparison value Vdiff_s is updated to the rotational speed comparison value Vdiff obtained when the predetermined condition is satisfied.

### Modification Example 3

In the above-described embodiment, the straight-travelling/turning determination device 100 is used for blinker cancel. However, in a motorcycle, it may also be used for estimation of the bank angle of the vehicle body.

Although a preferred embodiment of the present invention has been described above, the scope of the present invention is not limited to that embodiment. It will be apparent to those skilled in the art that various changes or improvements can be made to the above-described embodiment, and it will be apparent from the scope of the claims that modes obtained by adding such changes or improvements are also included in the technical scope of the present invention. Furthermore, symbols in parentheses in the claims are given solely for facilitation of understanding of the present invention, and the present invention should not be interpreted as being limited to elements given the symbols.

## Claims

1. A straight-travelling/turning determination device (100) for use in a motorcycle including:
a front wheel rotational speed detector (106) for detecting a rotational speed of a front wheel (18) of a vehicle (10);
a rear wheel rotational speed detector (108) for detecting a rotational speed of a rear wheel (30) of said vehicle (10);
a rotational speed comparison value calculator (124) for calculating a rotational speed comparison value (Vdiff), which is a value resulting from comparison between the rotational speed of the front wheel (18) and the rotational speed of the rear wheel (30); and
a straight-travelling/turning determiner (128) that determines whether said vehicle (10) is travelling straight or turning based on the magnitude of the rotational speed comparison value (Vdiff);
the straight-travelling/turning determination device (100) being **characterized by** including:
a vehicle speed detector (122) that detects vehicle speed; and
an acceleration detector (126) that detects vehicle acceleration;
wherein
the straight-travelling/turning determiner (128) determines a straight-travelling rotational speed comparison value (Vdiff_s) as the rotational speed comparison value in a state where the vehicle speed is equal to or lower than a first predetermined speed (V1) and an absolute value of the vehicle acceleration is equal to or smaller than a predetermined acceleration (A1) and a blinker (102) is not being actuated, and determines that the vehicle (10) is turning if a ratio or difference between the rotational speed comparison value (Vdiff) and the straight-travelling rotational speed comparison value (Vdiff_s) becomes larger than a threshold value (TH).

2. The straight-travelling/turning determination device (100) according to claim 1, **characterized in that**
the straight-travelling rotational speed comparison value (Vdiff_s) is updated if the state where the vehicle speed is equal to or lower than the first predetermined speed (V1) and the absolute value of the vehicle acceleration is equal to or smaller than the predetermined acceleration (A1) and the blinker (102) is not being actuated has continued for a first predetermined time (T1).

3. The straight-travelling/turning determination device (100) according to claim 2, **characterized in that**
the straight-travelling rotational speed comparison value (Vdiff_s) is an average value of the rotational speed comparison value (Vdiff) in the first predetermined time (T1).

4. The straight-travelling/turning determination device (100) according to any preceding claim, **characterized in that**
a limit is set on the amount by which the straight-travelling rotational speed comparison value (Vdiff_s) can be updated if the rotational speed comparison value (Vdiff), in the state in which the vehicle speed is equal to or lower than the first predetermined speed (V1) and the absolute value of the vehicle acceleration is equal to or smaller than the predetermined acceleration (A1) and the blinker (102) is not being actuated, has a ratio or difference greater than a predetermined value with respect to the previous straight-travelling rotational speed comparison value (Vdiff_s).

5. The straight-travelling/turning determination device (100) according to claim 4, **characterized in that**
the amount by which the straight-travelling rotational speed comparison value (Vdiff_s) can be update from the previous straight-travelling rotational speed comparison value (Vdiff_s) is limited to a value equal to or smaller than the predetermined value.

6. The straight-travelling/turning determination device (100) according to claim 4 or 5, **characterized in that**
the predetermined value of a change in the straight-travelling rotational speed comparison value (Vdiff_s) is set to a value equal to or smaller than the threshold value (TH).

7. The straight-travelling/turning determination device (100) according to any preceding claim, **characterized in that**
the rotational speed comparison value (Vdiff) is a ratio between the rotational speeds of the front and rear wheels.

8. The straight-travelling/turning determination device (100) according to any claim 1 to 6, **characterized in that**
the rotational speed comparison value (Vdiff) is a difference between the rotational speeds of the front and rear wheels.

## Patentansprüche

1. Eine gerader Lauf/Kurvenfahrtbestimmungsvorrichtung (100) für die Verwendung in einem Motorrad, umfassend:
einen Vorderraddrehzahldetektor (106) zum Bestimmen einer Drehzahl eines Vorderrads (18) eines Fahrzeugs (10);
einen Hinterraddrehzahldetektor (108) zum Bestimmen einer Drehzahl eines Hinterrades (30) des Fahrzeugs (10);
einen Drehzahlvergleichswert-Rechner (124) zum Berechnen eines Drehzahlvergleichswerts (Vdiff), der ein Wert ist, der aus dem Vergleich zwischen der Drehzahl des Vorderrads (18) und der Drehzahl des Hinterrads (30) resultiert; und
ein gerader Lauf/Kurvenfahrtbestimmer (128), der bestimmt, ob das Fahrzeug (10) geradeaus fährt oder sich dreht, auf der Basis der Größe des Drehzahlvergleichswerts (Vdiff);
die gerader Lauf/Kurvenfahrtbestimmungsvorrichtung (100) ist **gekennzeichnet durch** das umfassen von:
einem Fahrzeuggeschwindigkeitsdetektor (122), der die Fahrzeuggeschwindigkeit bestimmt; und
einem Beschleunigungsdetektor (126), der die Fahrzeugbeschleunigung bestimmt;
wobei
der gerade Lauf/Kurvenfahrtbestimmer (128) einen geraden Lauf Drehzahlvergleichswert (Vdiff_s) bestimmt als den Drehzahlvergleichswert in einem Zustand, in dem die Fahrzeuggeschwindigkeit gleich oder niedriger ist als eine erste vorbestimmte Geschwindigkeit (V1) und ein Absolutwert der Fahrzeugbeschleunigung gleich oder kleiner ist als eine vorbestimmte Beschleunigung (A1) und ein Blinker (102) nicht betätigt wird, und bestimmt, dass das Fahrzeug (10) sich dreht, wenn das Verhältnis oder die Differenz zwischen dem Drehzahlvergleichswert (Vdiff) und dem geraden Lauf Drehzahlvergleichswert (Vdiff_s) größer als ein Schwellenwert (TH) wird.

2. Die gerader Lauf/Kurvenfahrtbestimmungsvorrichtung (100) nach Anspruch 1, **dadurch gekennzeichnet, dass**
der gerade Lauf Drehzahlvergleichswert (Vdiff_s) aktualisiert wird, wenn der Zustand, in dem die Fahrzeuggeschwindigkeit gleich oder niedriger ist als die erste vorbestimmte Geschwindigkeit (V1) und der absolute Wert der Fahrzeugbeschleunigung gleich oder kleiner ist als die vorbestimmte Beschleunigung (A1) und der Blinker (102) nicht betätigt wird, für eine erste vorbestimmte Zeit (T1) angehalten hat.

3. Die gerader Lauf/Kurvenfahrtbestimmungsvorrichtung (100) nach Anspruch 2, **dadurch gekennzeichnet, dass**
der gerade Lauf Drehzahlvergleichswert (Vdiff_s) ein Mittelwert des Drehzahlvergleichswerts (V diff) in der ersten vorbestimmten Zeit (T1) ist.

4. Die gerader Lauf/Kurvenfahrtbestimmungsvorrichtung (100) nach einem der vorhergehenden Ansprüche, **dadurch gekennzeichnet, dass**
eine Grenze für den Betrag, um den der gerade Lauf Drehzahlvergleichswert (Vdiff_s) aktualisiert werden kann, eingestellt ist wenn der Drehzahlvergleichswert (Vdiff) in dem Zustand, in dem die Fahrzeuggeschwindigkeit gleich oder niedriger als die erste vorbestimmte Geschwindigkeit (V1) ist und der absolute Wert der Fahrzeugbeschleunigung gleich oder kleiner ist als die vorbestimmte Beschleunigung (A1) und der Blinkers (102) nicht betätigt wird, ein Verhältnis oder eine Differenz größer als ein vorbestimmter Wert in Bezug auf den vorherigen geraden Lauf Drehzahlvergleichswert (Vdiff_s) aufweist.

5. Die gerader Lauf/Kurvenfahrtbestimmungsvorrichtung (100) nach Anspruch 4, **dadurch gekennzeichnet, dass**
der Betrag, um den der gerade Lauf Drehzahlvergleichswert (Vdiff_s) von dem vorherigen geraden Lauf Drehzahlvergleichswert (Vdiff_s) aktualisiert werden kann, auf einen Wert gleich oder kleiner als der vorbestimmte Wert begrenzt ist.

6. Die gerader Lauf/Kurvenfahrtbestimmungsvorrichtung (100) nach Anspruch 4 oder 5, **dadurch gekennzeichnet, dass**
der vorbestimmte Wert einer Änderung des geraden Lauf Drehzahlvergleichswerts (Vdiff_s) auf einen Wert gleich oder kleiner als der Schwellenwert (TH) eingestellt ist.

7. Die gerader Lauf/Kurvenfahrtbestimmungsvorrichtung (100) nach einem der vorhergehenden Ansprüche, **dadurch gekennzeichnet, dass**
der Drehzahlvergleichswert (Vdiff) ein Verhältnis zwischen den Drehzahlen der Vorder- und Hinterräder ist.

8. Die gerader Lauf/Kurvenfahrtbestimmungsvorrichtung (100) nach einem der Ansprüche 1 bis 6, **dadurch gekennzeichnet, dass**
der Drehzahlvergleichswert (Vdiff) eine Differenz zwischen den Drehzahlen der Vorder- und Hinterräder ist.

## Revendications

1. Dispositif de détermination de conduite en ligne droite ou en virage (100) pour utilisation dans une moto, comprenant :
un détecteur de vitesse de rotation de roue avant (106) pour détecter la vitesse de rotation d'une roue avant (18) d'un véhicule (10) ;
un détecteur de vitesse de rotation de roue arrière (108) pour détecter la vitesse de rotation d'une roue arrière (30) dudit véhicule (10) ;
un calculateur de valeur de comparaison de vitesses de rotation (124) pour calculer une valeur de comparaison de vitesses de rotation (Vdiff), qui est une valeur résultant de la comparaison entre la vitesse de rotation de la roue avant (18) et la vitesse de rotation de la roue arrière (30) ; et
un déterminant de conduite en ligne droite ou en virage (128) qui détermine si ledit véhicule (10) se déplace en ligne droite ou effectue un virage sur la base de la grandeur de la valeur de comparaison de vitesses de rotation (Vdiff) ;
le dispositif de détermination de conduite en ligne droite ou en virage (100) étant **caractérisé en ce qu'**il comprend :
un détecteur de vitesse de véhicule (122) qui détecte la vitesse du véhicule ; et
un détecteur d'accélération (126) qui détecte l'accélération du véhicule ;
dans lequel :
le déterminant de conduite en ligne droite ou en virage (128) détermine une valeur de comparaison de vitesses de rotation en conduite en ligne droite (Vdiff_s) comme valeur de comparaison de vitesses de rotation dans une situation où la vitesse du véhicule est égale ou inférieure à une première vitesse prédéterminée (V1) et qu'une valeur absolue de l'accélération du véhicule est égale ou inférieure à une accélération prédéterminée (A1) tandis qu'un clignotant (102) n'est pas actionné, et détermine que le véhicule (10) effectue un virage si un rapport ou une différence entre la valeur de comparaison de vitesses de rotation (Vdiff) et la valeur de comparaison de vitesses de rotation en conduite en ligne droite (Vdiff_s) devient plus grand(e) qu'une valeur de seuil (TH).

2. Dispositif de détermination de conduite en ligne droite ou en virage (100) selon la revendication 1, **caractérisé en ce que** :
la valeur de comparaison de vitesses de rotation en conduite en ligne droite (Vdiff_s) est mise à jour si la situation où la vitesse du véhicule est égale ou inférieure à la première vitesse prédéterminée (V1) et que la valeur absolue de l'accélération du véhicule est égale ou inférieure à l'accélération prédéterminée (A1) tandis que le clignotant (102) n'est pas actionné, s'est prolongée pendant une première période prédéterminée (T1).

3. Dispositif de détermination de conduite en ligne droite ou en virage (100) selon la revendication 2, **caractérisé en ce que** :
la vitesse de comparaison de vitesses de rotation en conduite en ligne droite (Vdiff_s) est une valeur moyenne de la valeur de comparaison de vitesses de rotation (Vdiff) dans la première période prédéterminée (T1).

4. Dispositif de détermination de conduite en ligne droite ou en virage (100) selon l'une quelconque des revendications précédentes, **caractérisé en ce que** :
une limite est réglée sur le degré de mise à jour éventuel de la valeur de comparaison de vitesses de rotation en conduite en ligne droite (Vdiff_s) si la valeur de comparaison de vitesses de rotation (Vdiff) dans la situation où la vitesse du véhicule est égale ou inférieure à la première vitesse prédéterminée (V1) et que la valeur absolue de l'accélération du véhicule est égale ou inférieure à l'accélération prédéterminée (A1) tandis que le clignotant (102) n'est pas actionné, présente un rapport ou une différence supérieure à une valeur prédéterminée par rapport à la valeur de comparaison de vitesses de rotation en conduite en ligne droite précédente (Vdiff_s).

5. Dispositif de détermination de conduite en ligne droite ou en virage (100) selon la revendication 4, **caractérisé en ce que** :
le degré de mise à jour éventuel de la valeur de comparaison de vitesses de rotation en conduite en ligne droite (Vdiff_s) à partir de la valeur de comparaison de vitesses de rotation de conduite en ligne droite précédente (Vdiff_s) est limité à une valeur égale ou inférieure à la valeur prédéterminée.

6. Dispositif de détermination de conduite en ligne droite ou en virage (100) selon la revendication 4 ou la revendication 5, **caractérisé en ce que** :
la valeur prédéterminée d'un changement de la valeur de comparaison de vitesses de rotation en conduite en ligne droite (Vdiff_s) est réglée à une valeur égale ou inférieure à la valeur de seuil (TH).

7. Dispositif de détermination de conduite en ligne droite ou en virage (100) selon l'une quelconque des revendications précédentes, **caractérisé en ce que** :
la valeur de comparaison de vitesses de rotation (Vdiff) est un rapport entre les vitesses de rotation des roues avant et arrière.

8. Dispositif de détermination de conduite en ligne droite ou en virage (100) selon l'une quelconque des revendications 1 à 6, **caractérisé en ce que** :
la valeur de comparaison de vitesses de rotation (Vdiff) est une différence entre les vitesses de rotation des roues avant et arrière.
